(19) Europäisches Patentamt

European Patent Office

Office européen des brevets

(11) **EP 0 982 208 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.⁷: $B60T\ 13/16$, $B60T\ 8/40$

(21) Anmeldenummer: **99112210.2**

(22) Anmeldetag: **25.06.1999**

(54) **Verfahren und Vorrichtung zur Ansteuerung einer Pumpe eines Bremssystems**

Method and device for controlling the pump of a brake system

Procédé et dispositif de commande de la pompe d'un système de freinage

(84) Benannte Vertragsstaaten:
**DE FR GB**

(30) Priorität: **27.08.1998 DE 19838948**

(43) Veröffentlichungstag der Anmeldung:
**01.03.2000 Patentblatt 2000/09**

(73) Patentinhaber: **ROBERT BOSCH GMBH**
**70442 Stuttgart (DE)**

(72) Erfinder: **Haas, Hardy**
**71706 Markgroeningen (DE)**

(56) Entgegenhaltungen:
**DE-A- 19 501 760**      **DE-A- 19 548 248**
**DE-A- 19 705 653**

## Beschreibung

Stand der Technik

Die Erfindung betrifft Verfahren und Vorrichtung mit einer Steuerung zur Ansteuerung eines ein Druckmedium fördernden Mittels eines Bremssystems gemäß den Oberbegriffen der Ansprüche 1 und 14.

Aus der DE 195 48 248 A1 ist ein Verfahren und eine Vorrichtung zur Steuerung einer Pumpe eines elektrohydraulischen Bremssystems bekannt. Hierbei wird die Hydraulikflüssigkeit aus einem Druckspeicher über Ventile in die Radbremszylinder eingesteuert, wobei der Druckspeicher mit einer Pumpe geladen wird. Um ein möglichst geräuschloses Laden des Druckspeichers zu erreichen, wird die Pumpe mit einem bedarfsgerechten Pulspausenverhältnis eines PWM-Signals, abhängig vom Volumenbedarf an Hydraulikflüssigkeit und einem Druck im Druckspeicher angesteuert. Das PWM-Signal wird dabei abhängig von einem vorgebbaren Druckwert und der Abweichung des Ist-Druckes von diesem Wert verändert. Dabei wird eine Vielzahl von festen Druckschwellwerten zur förderleistungsgerechten Ansteuerung verwendet. In dieser Offenlegungsschrift wird speziell die Ansteuerung einer Pumpe in einem elektrohydraulischen Bremssystem beschrieben.

Daneben sind Verfahren und Vorrichtungen bekannt, bei denen in hydraulischen Bremssystemen die Rückförderpumpen eines Hydroaggregats für ein Antiblockiersystem (ABS), eine Antriebsschlupfregelung (ASR) oder eine Fahrdynamikregelung (FDR, ESP) in Abhängigkeit des Fahrerbremswunsches angesteuert werden. Dies ist z. B. aus der DE 195 01 760 A1 bekannt. In dieser Offenlegungsschrift wird mittels eines Sensors der Druck im Hauptbremszylinder erfaßt, welcher die Betätigung des Bremspedals und damit den Fahrerwunsch repräsentiert. Mittels eines Schwellwertvergleichs des Drucks wird die Rückförderpumpe so angesteuert, daß sich nach Bedarf einer der Zustände Druckabbau, Druckanstieg oder Druckhalten ergibt.

Außerdem existiert eine Vielzahl von Schriften, in denen unterschiedliche Ausbildungen von Bremsanlagen mit darin eingebetteten druckfördernden Mitteln, insbesondere Pumpen, dargestellt sind.

Es hat sich gezeigt, daß die bekannten Verfahren sowie die entsprechenden Vorrichtungen nicht in jeder Beziehung optimale Ergebnisse zu liefern vermögen. So wird durch die bisherige Pumpenansteuerung zwar ein schnelles Erreichen eines gewünschten Solldrucks erzielt, dabei aber die Bildung einer definierten Pedalbewegung und damit eines definierten Pedalgefühls durch einen geregelten Pumpeneingangsdruck vernachlässigt, da zur Erzielung der gewünschten Druckaufbaudynamik undosiert Druck aus dem Hauptbremszylinder entnommen wird. Dies führt darüber hinaus bei saugendem Betrieb der Pumpe zu einer Kennlinienverschiebung der Bremsanlage. Daneben entsteht bedingt durch die hohe Förderleistung und durch dabei auftretende Kavitationseffekte bei Teilförderung der Pumpe eine nicht vernachlässigbare Geräuschentwicklung.

Vorteile der Erfindung

Durch die erfindungsgemäße gleichzeitige oder alternative Verwendung verschiedener Druckdifferenzen zur Bildung des Ansteuersignals bzw. zur Regelung des druckfördernden Mittels ,insbesondere einer Pumpe bzw. eines Pumpenmotors, werden die Nachteile des Standes der Technik kompensiert und daneben noch weitere Vorteile erzielt.

Einerseits können zwei grundlegende Ziele, einmal das schnelle Erreichen des Solldrucks und zum anderen eine definierte Pedalbewegung und damit ein definiertes Pedalgefühl erreicht werden. Die geschieht durch gezielte Verwendung des am Eingang des druckfördernden Mittels anliegenden Drucks zur Regelung und/oder Vorsteuerung. Durch die Wahl einer Kennlinie, die keine durchgehend lineare, sondern abschnittsweise eine nicht lineare Verstärkung zwischen einem Ist-Druckwert und einem Soll-Druckwert aufweist kann die Bremspedalbewegung und damit dieses Pedalgefühl exakt den Einsatzbedingungen und/oder dem Fahrerwunsch angepaßt werden. Daneben entsteht durch Verwendung wenigstens einer zweiten Druckdifferenz zur Regelung und/oder Vorsteuerung des druckfördernden Mittels, insbesondere der Pumpe, kein durch Kavitationseffekte hervorgerufenes Geräusch, da das druckfördernde Mittel immer ausreichend durch die Pedalkraft des Fahrers vorgeladen wird. Darüber hinaus wird durch die vorgenannten und in den Ansprüchen aufgezählten Merkmale saugender Betrieb des druckfördernden Mittels vermieden, wodurch eine Kennlinienverschiebung der Bremsanlage nicht stattfindet. Daneben entstehen durch die exaktere Regelung und/oder Vorsteuerung im Mittel geringere Pumpenmotordrehzahlen wodurch insgesamt eine geringere Bordnetzbelastung und ein niedrigerer Geräuschpegel erzielt wird.

Weitere vorteilhafte und zweckmäßige Ausgestaltungen und Weiterbildungen der Erfindung sind in den Unteransprüchen gekennzeichnet.

Zeichnung

Die Erfindung wird nachstehend anhand der in der Zeichnung dargestellten Ausführungsformen erläutert.

Figur zeigt beispielhaft ein Bremssystem mit Steuergerät in welchem eine Rückförderpumpe angesteuert wird. Aus Gründen der Übersichtlichkeit ist dabei nur ein Bremskreis dargestellt. Weitere Bremskreise können analog dazu angenommen werden. Figur 2 zeigt ein Blockschaltbild mit Sensorik und Steuerung, in welchem die Regelung des Pumpenmotors dargestellt ist. In Figur 3 ist eine Kennlinie zur Verstärkung bzw. Anpassung der Regeldifferenz bezüglich des Hauptbremszylinderdrucks dargestellt. Figur 4 zeigt eine Vorsteuerkennlinie, welche in einem weiteren Ausführungsbeispiel optional eingesetzt werden kann, um mittels einer Differenz aus Hauptbremszylinderdruck und Bremskreisdruck einen Durchgriff auf die Ansteuersignalbildung zur Motoransteuerung zu realisieren. In Figur 5 sind zwei Kennlinien gegenübergestellt, die zur Sollwertbildung des Bremskreisdrucks verwendbar sind, wobei die eine Kennlinie eine zusätzliche Verstärkung offenbart, um die Pedalbewegung zu optimieren.

Beschreibung der Ausführungsbeispiele

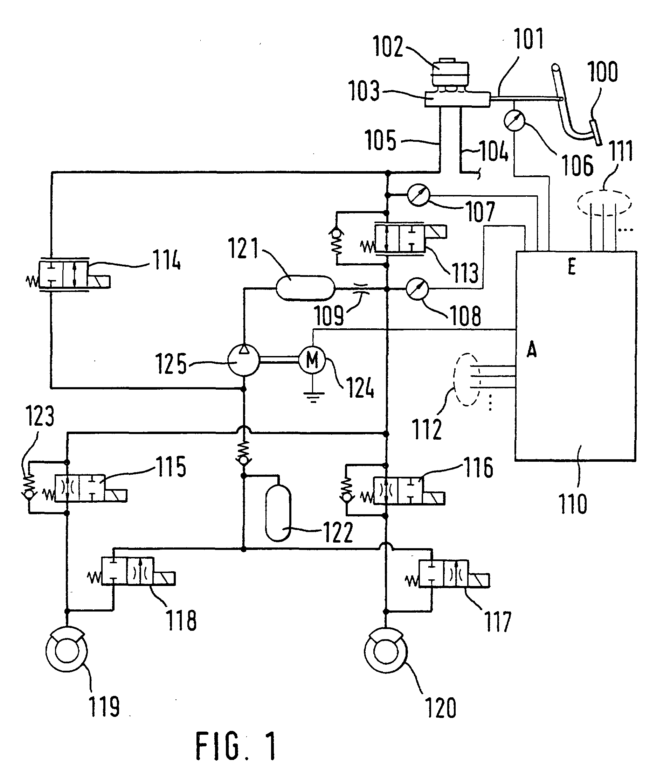

In Figur 1 ist eine hydraulische Fahrzeugbremsanlage mit einer Steuerung 110 dargestellt, die entweder eine übergeordnete Logik (z.B. für ABS, ASR, FDR) umfaßt oder mit einer solchen verbunden ist. Über ein Bremspedal 100 speist der Fahrer seinen Bremswunsch in das Bremssystem ein. Das Bremspedal 100 ist mittels einer Kolbenstange 101 mit dem Hauptbremszylinder 103 verbunden. Dabei kann je nach Ausführungsform ein Vakuumbremskraftverstärker oder wie in diesem Ausführungsbeispiel bei einer hydraulischen Bremskraftverstärkung (HBV) kein zusätzlicher Bremskraftverstärker zwischengeschaltet sein. Mit dem hier zweikreisigen Hauptbremszylinder 103 steht ein Vorratsbehälter 102 in Verbindung. Aus Gründen der Übersichtlichkeit ist über Leitung 105 lediglich ein Bremskreis dargestellt. Analog dazu sei über Leitung 104 ein weiterer Bremskreis angekoppelt. Mittels eines Sensors 106 wird der Weg der Kolbenstange bzw. der im Hauptbremszylinder 103 zurückgelegte Weg erfaßt. Dieser Weg wird im Weiteren als Hauptbremszylinderweg sHZ bezeichnet. Im zu beschreibenden Bremskreis ist ein Drucksensor 107 mit der Hauptbremsleitung 105 verbunden. Dieser erfaßt den Druck im Druckmedium wie er ebenfalls am Pumpeneingang ansteht. Durch die Verbindung von Hauptbremszylinder 103 mit dem Pumpeneingang über die Ventilanordnung 114, entspricht der Pumpeneingangsdruck bei geöffneter Stellung des Ventils 114 dem Hauptbremszylinderdruck pHZist. Der Drucksensor 107 kann entweder jeweils nur für einen Bremskreis, oder für mehrere Bremskreise Verwendung finden, da der aufgebaute Ladedruck, der dem Hauptbremszylinderdruck pHZist entspricht in allen vom Hauptbremszylinder 103 abgehenden Leitungen (104, 105) ansteht. Ebenso kann aber für jeden Bremskreis ein einzelner Drucksensor zur Erfassung des Pumpeneingangsdrucks bzw. des Hauptbremszylinderdrucks vorgesehen sein.

Die Einleitung des Druckmediums in den Bremskreis erfolgt über ein Vorladeventil 114. Solche steuerbaren Wegeventile wie 114 sind beispielsweise als elektromagnetisch steuerbare 2/2-Wegeventile ausgebildet und zwischen dem Hauptbremszylinder 103 und der Rückförderpumpe 125 angebracht. Ausgangsseitig an die Rückförderpumpe 125 schließt sich die Dämpferkammer 121 an. In Richtung zum Hauptbremszylinder 103 sowie zu den jeweiligen Bremsdruckaufbauventilen, also den Einlaßventilen 115, 116 in die Radbremsen folgt die Drossel 109. Der Auslaß des Druckmediums aus dem Bremskreis erfolgt über ein weiteres 2/2-Wegeventil 113. Der Auslaß des Druckmediums aus dem Bremskreis könnte auch über eine Kombination aus Umschaltventil und Druckbegrenzungsventil an gleicher Stelle wie Ventil 113 gesteuert werden. Generell können auch andere Ventilkombinationen für Einlaß und/oder Auslaß und/oder Durchlaß des Druckmediums in der Bremsanlage Verwendung finden.

Um größere Übersichtlichkeit in der Darstellung zu erzielen, sind alle Sicherheitsventile in Figur 1 in Form des Rückschlagventils 123 ausgeführt. Dies ist aber erfindungsgemäß nicht zwingend notwendig und so können situationsbedingt unterschiedliche Ventile oder Ventilkombinationen im Zusammenhang mit dieser Sicherheitsfunktion verwendet werden. Alle hier verwendeten Sicherheitsventile sind somit unter der Bezeichnung 123 zusammengefaßt. Das Ventil 113 ist mittels eines Rückschlagventils umgehbar, so daß dann, wenn automatischer Bremsbetrieb vorliegt, bei ausreichender Betätigung des Bremspedals 100, Druck aus dem Hauptbremszylinder 103 sich bis zu den Ventilanordnungen zur Bremsdruckmodulation 115 bis 118 fortpflanzen kann. Von diesen Bremsventilanordnungen werden 115 und 116 als Einlaßventil des jeweiligen Radbremszylinders 119 oder 120 und die Ventilanordnungen 118 und 117 jeweils als Auslaßventil bezeichnet. An der Druckleitung, die von den Auslaßventilen 117 und 118 zur Rückförderpumpe 125 führt ist des weiteren ein Druckspeicher 122 angebracht. Die Rückförderpumpe 125 selbst wird über einen Motor 124 angetrieben. Nach der Drossel 109 ist an der Bremsleitung ein weiterer Drucksensor 108 angebracht. Eine Angabe zur genauen Position des jeweiligen Radbremszylinders 119 oder 120 ist bewußt nicht getroffen, da für die erfindungsgemäßen Verfahren und die Vorrichtungen keine bestimmte Anordnung, wie X- oder parallel Bremskreisaufteilung notwendig ist, sondern je nach Bedarf beliebig verwendet werden kann.

Die Positionen der Sensoren ist nicht festgelegt, es muß lediglich sichergestellt sein, daß der Bremskreisdruck pBKist und der Pumpeneingangsdruck bzw. der Hauptbremszylinderdruck pHZist und darüber hinaus nötigenfalls der Hauptbremszylinderweg sHZ erfaßt werden können. Statt des Einsatzes einzelner Sensoren zur Erfassung der Druckverhältnisse (107, 108) bzw. des Hauptbremszylinderwegs sHZ (106) können diese zu erfassenden Größen auch mit Hilfe einer Modellbildung geschätzt bzw. anderweitig berechnet werden.

Der zu erfassende Informationsgehalt der einzelnen Größe aus der Sensorik 106, 107 und 108 wird der Steuerung 110 zugeführt. Die nicht erfindungswesentliche, Eingangsgrößen für z.B. die Steuerung 110 liefernde Sensorik, wie z. B. Raddrehzahlsensoren, ein Gierratensensor etc. ist in der Zeichnung weggelassen.

So sind weitere notwendige, dem Fachmann in naheliegender Weise bekannte Eingangsgrößen in Figur 1 in Leitungsbündel 111 zusammengefaßt. Ebenso ist ausgangsseitig lediglich die Ansteuerung des Pumpenmotors 124 konkret ausgebildet, weitere notwendige dem Fachmann ebenfalls bekannte Steuerleitungen und Verbindungen wie beispielsweise Ausgangssignale zur Ansteuerung der Ein- und Auslaßventile führende Leitungen, die nicht erfindungswesentlich sind, sind in Leitungsbündel 112 zusammengefaßt und nicht näher beschrieben.

Die erfindungsgemäßen Verfahren und Vorrichtung werden hier für eine Bremshydraulik mit Rückförderpumpe und hydraulischer Bremskraftverstärkung (HBV), also ohne Vakuumbremskraftverstärker dargestellt. Die erfindungswesentliche Anordnung und die unterschiedliche Drücke aufweisenden Druckleitungen oder Druckspeicher zur Erfassung von Druckdifferenzen sowie ein ansteuerbares, das Druckmedium förderndes Mittel, sind aber analog in anderen Bremsanlagen mit unterschiedlichen Druckmedien und Ausgestaltungen, beispielsweise auch mit zusätzlichen Bremskraftverstärkern zu finden. Somit kann die Erfindung auch bei elektrohydraulischen, hydraulischen, elektropneumatischen, pneumatischen und vergleichbaren Bremssystemen eingesetzt werden, um die Regelung des druckfördernden Mittels zu verbessern.

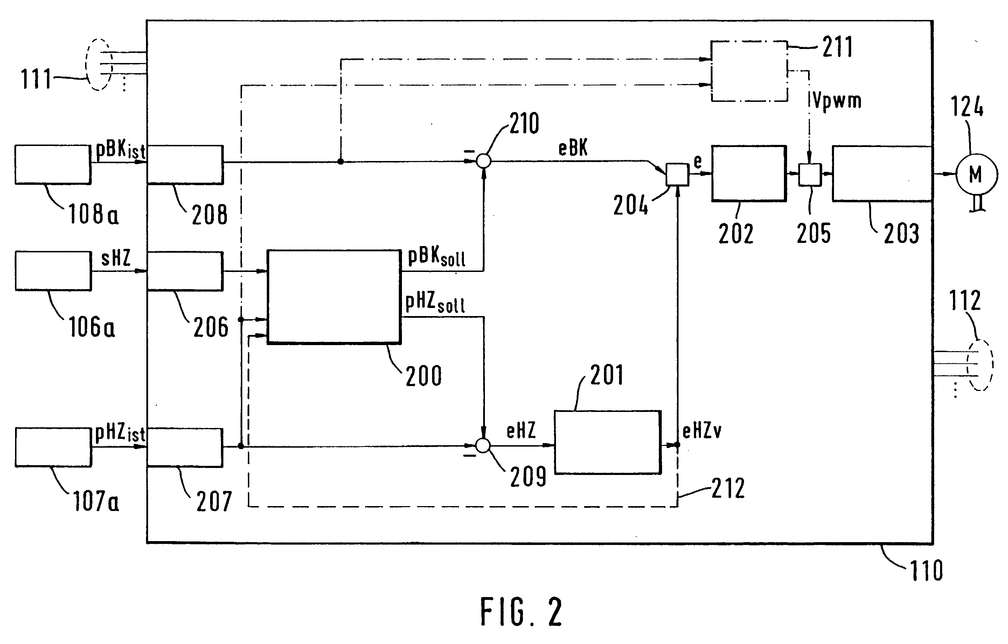

Figur 2 zeigt erfindungswesentliche Teile der Steuerung 110 und deren Ein- und Ausgänge in einem Blockschaltbild. Die Sensorik aus Figur 1 ist hier in drei Blöcken dargestellt. In Block 106a wird der Weg der Kolbenstange 101 aus Figur 1 bzw. der Hauptbremszylinderweg sHZ erfaßt. Mittels der Blöcke 107a und 108a werden der Ist-Druck im Hauptbremszylinder pHZist sowie der Ist-Druck im Bremskreis pBKist ermittelt und der Steuerung 110 zugeführt. Diese Eingangsinformationen werden in den angrenzenden Blöcken 206, 207 und 208 zur weiteren Verarbeitung aufbereitet. Neben der Verwendung der analogen Größen, ist z. B. für die Verwendung in einem Rechnerprogramm das Einlesen und eben Aufbereiten dieser Größen nötig. Für den erfindungsgemäßen Einsatz der Größen ist somit die in ihnen enthaltene Information entscheidend und kann ebenso analog wie digital Verwendung finden.

Die Information des Hauptbremszylinderwegs sHZ und des Hauptbremszylinderdrucks pHZist wird einer Logik, Block 200 zugeführt. In diesem Block 200 findet die Sollwertbildung statt. Block 200 kann darüber hinaus noch weitere Funktionen umfassen, insbesondere kann darin die gesamte Logik für z.B. ABS, ASR, FDR und/oder HBV enthalten sein. Erfindungswesentlich ist aber die Sollwert-Bildung in Block 200, welche später noch genauer erläutert wird. Im Anschluß wird der Bremskreissolldruck pBKsoll sowie der Hauptbremszylindersolldruck pHZsoll zur Regelung ausgegeben. Damit wird einerseits in Verknüpfungspunkt 210 die Regeldifferenz bzw. Druckdifferenz eBK des Bremskreises aus dem Bremskreissolldruck pBKsoll und dem Bremskreisistdruck pBKist gebildet. Ebenso wird in Verknüpfungspunkt 209 die Regeldifferenz bzw. Druckdifferenz eHZ im Hauptbremszylinder aus dem Hauptbremszylindersolldruck pHZsoll und dem Hauptbremszylinderistdruck pHZist gebildet. Die im Weiteren verwendeten Begriffe der Regeldifferenz, des Regelfehlers oder der Druckdifferenz für eBK, eHZ, eHZv oder eBKHZ sind aufgrund der Tatsache, daß Druckabweichungen zwischen Soll- und Ist-Druck ausgeregelt werden gleichbedeutend. Aus der Regeldifferenz eHZ wird im Block 201 eine angepaßte bzw. veränderte Regel- bzw. Druckdifferenz eHZv der Regeldifferenz eHZ gebildet. Diese veränderte Druckdifferenz eHZv wird zusammen mit der Druckdifferenz des Bremskreisdrucks eBK dem Verknüpfungselement 204 zugeführt. Aus diesem Verknüpfungselement 204 wird der endgültige Regelfehler e, also die endgültige Regeldifferenz einem Regler im Block 202 zugeführt. Als Regler können hier alle bekannten Reglertypen, wie P-, PI-, Zustandsregler, etc. eingesetzt werden. Besonders zweckmäßig hat sich dabei die Verwendung eines PID Reglers erwiesen. Über Block 205 hinweg wird die Ausgangsgröße aus Block 202 in einen, ein Stellglied beinhaltenden Block 203 geführt. In Block 203 entsteht dann das endgültige Ansteuersignal für den Pumpenmotor 124. Aus Übersichtlichkeitsgründen ist in der Zeichnung nach dem Pumpenmotor 124 abgebrochen, Pumpe und Bremshydraulik sind in Figur 2, ebenso wie nicht erfindungswesentliche Teile der Steuerung 110 nicht dargestellt. Die angedeuteten Leitungsbündel 111 und 112 sind bereits in Figur 1 beschrieben.

In einer weiteren Ausführungsform wird der Ist-Druck im Hauptbremszylinder pHZist und wenigstens ein Ist-Druck eines Bremskreises pBKist einem Block 211 zugeführt. Ebenso kann als Ist-Druckwert pBKist eine Verknüpfung der Druckwerte der angeschlossenen Bremskreise oder beides Verwendung finden. Die daraus entstehende Größe wird über das Verknüpfungselement 205 vor Block 203 in den Regelkreis eingekoppelt.

In Kombination oder alternativ dazu, kann mittels Leitung 212 die veränderte Regel- bzw. Druckdifferenz eHZv direkt zur Sollwertbildung in Block 200 verwendet werden. Dazu wird einem weiteren Ausführungsbeispiel eHZv eben über Leitung 212 in Block 200 eingekoppelt, wobei dann die Einkopplung in das Verknüpfungselement 204 entfallen kann. Dabei wird der Bremskreisdrucksollwert pBKsoll in einem bevorzugten Ausführungsbeispiel direkt mit eHZv multipliziert, wobei aber auch andere Verknüpfungen denkbar sind.

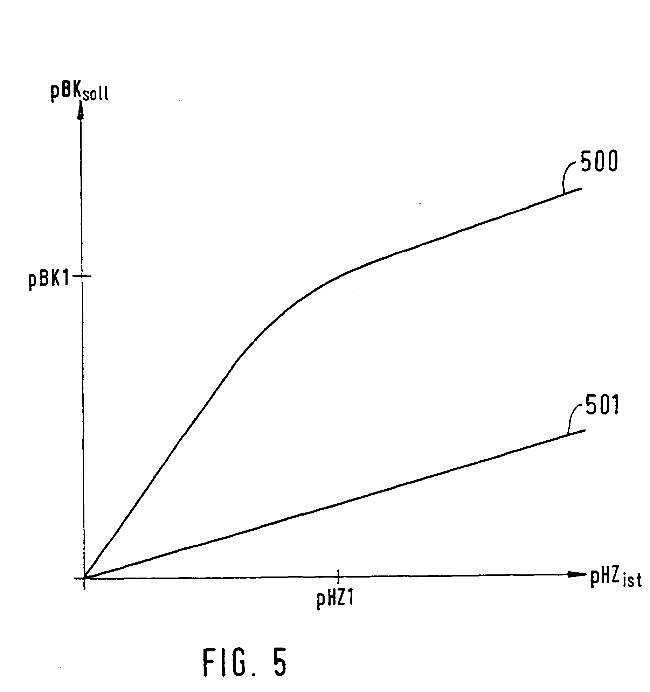

In Block 200 erfolgt die Sollwertbildung für die Pumpenregelung. Der Bremskreissolldruck pBKsoll wird darin als Funktion des Ist-Druckes im Hauptbremszylinder pHZist gebildet. Dabei wird der Bremskreissolldruck pBKsoll beispielsweise über eine Kennlinie aus dem Ist-Druck im Hauptbremszylinder pHZist ermittelt, wie dies später anhand von Figur 5 dargestellt ist.

In einer weiteren Ausführungsform geht auch der Hauptbremszylinderweg sHZ entweder als Größe direkt oder in eine Korrekturgröße SK1 ein. Solch eine Korrekturgröße SK1 wird aus dem Vergleich des Weges im Hauptbremszylinder sHZ und des Hauptbremszylinderistdrucks pHZist ermittelt. Aus dem Hauptbremszylinderweg sHZ läßt sich durch den Fachmann z.B. mittels einer Druck-Volumen-Kennlinie der Bremsanlage leicht der Hauptbremszylinderistdruck pHZist und umgekehrt aus dem Hauptbremszylinderistdruck pHZist der Hauptbremszylinderweg sHZ ermitteln. Aus dem Unterschied, beispielsweise durch Quotienten- oder Differenzbildung, im Vergleich der jeweils gemessenen oder geschätzten Größe mit der zugehörigen ermittelten Größe ergibt sich dann die Korrekturgröße SK1.

Der Hauptbremszylindersolldruck pHZsoll, der zur Differenzbildung im Verknüpfungspunkt 209 einfließt, wird aus dem nach einer der vorgenannten Methoden ermittelten Bremskreissolldruck pBKsoll gebildet. Dies geschieht ebenfalls über einen funktionalen Zusammenhang, wie z.B. eine Kennlinie. In einem einfachen Fall kann dies aber auch durch Multiplikation mit einem weiteren Korrekturfaktor SK2 geschehen. Dieser Korrekturfaktor SK2 enthält neben anderen vorgebbaren, auch im Vorfeld ermittelbaren Größen den Wert der gewünschten Druckverstärkung.

In einem weiteren Ausführungsbeispiel kann ebenfalls der Bremskreisistdruck pBKist zur Sollwertbildung der Drücke pHZsoll und pBKsoll herangezogen werden. In einem bevorzugten Ausführungsbeispiel geht der Bremskreisistdruck pBKist in die Korrekturwerte SK1 und/oder SK2 ein.

Neben der Druckdifferenz im Bremskreis eBK wird auch die Regeldifferenz im Hauptbremszylinder eHZ gebildet. Die endgültige Verknüpfung beider Druck- bzw. Regeldifferenzen eBK und eHZ erfolgt im Element 204. Dabei liefert die Multiplikation der Regeldifferenz im Bremskreis eBK und der, aus der Regeldifferenz des Hauptbremszylinders eHZ, veränderten Druckdifferenz eHZv gute Ergebnisse. Dennoch ist auch jede andere funktionelle Verknüpfung der beiden Regel- bzw. Druckdifferenzen eBK und eHZv mit e=f(eBK, eHZ) denkbar. Durch die mögliche Verbindung vom Hauptbremszylinder 103 mit dem Pumpeneingang entspricht der Pumpeneingangsdruck dem Hauptbremszylinderdruck pHZist. Durch die Verknüpfung des Regelfehlers eBK mit der veränderten Druckdifferenz eHZv kann nun sowohl der Pumpeneingangsdruck als auch der Druck im Bremskreis pHZist geregelt werden. In Block 203 wird aus dem eingehenden Signal das Ansteuersignal für den Pumpenmotor, insbesondere ein pulsweitenmoduliertes Ansteuersignal gebildet.

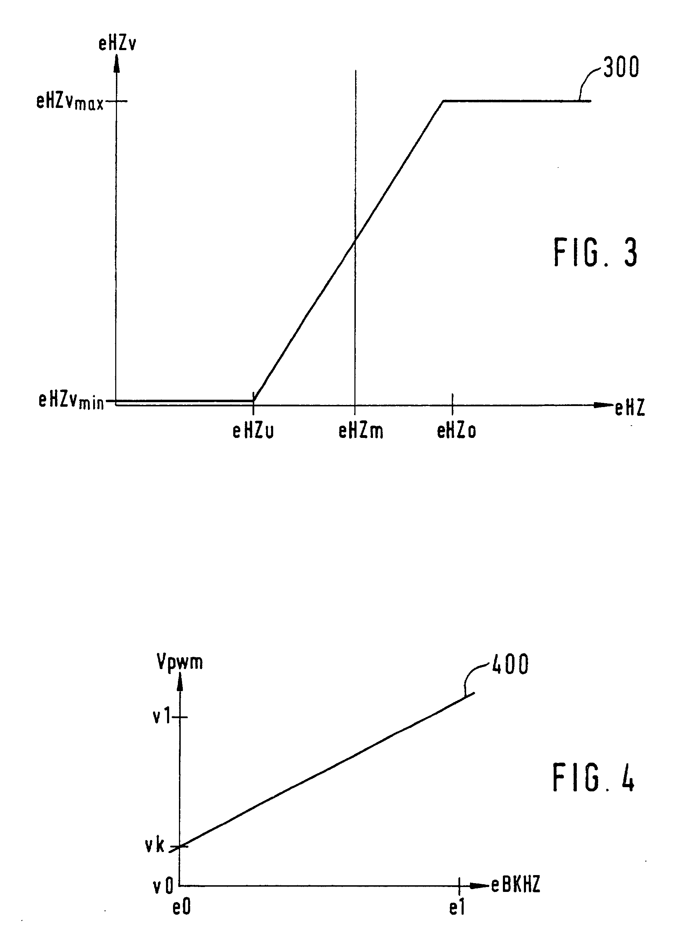

Figur 3 zeigt ein Ausführungsbeispiel für den bereits genannten funktionellen Zusammenhang zwischen der Druckdifferenz bzw. dem Regelfehler im Hauptbremszylinder eHZ und dem daraus zu bildenden veränderten Wert eHZv in Form einer Kennlinie 300. In diesem Zusammenhang ist auch jede andere Verknüpfung von eHZ und eHZv denkbar. In Block 201 wird die eingehende Druckdifferenz eHZ in dieser Ausführungsform abhängig von ihrer Größe unterschiedlichen Ausgangswerten eHZv zugeordnet. Dies kann diskret oder kontinuierlich erfolgen.

Dazu ist die Kennlinie 300 in drei Abschnitte unterteilt. Nach einem Abschnitt für Werte von eHZ kleiner einem unteren Grenzwert eHZu folgt dann ein Bereich mit linearem Anstieg zwischen dem unteren Grenzwert eHZu über einen Mittelwert eHZm zu einem oberen Grenzwert eHZo. Daran schließt sich ein Abschnitt für Werte von eHZ größer als der obere Grenzwert eHZo an. In einem bevorzugten Ausführungsbeispiel sind dabei der untere Grenzwert eHZu und der obere Grenzwert eHZo symmetrisch um einen Mittelwert eHZm angeordnet, der einer Regeldifferenz eHZ von Null entspricht. Dabei ist eHZu mit negativem Vorzeichen behaftet, was bedeutet, daß der Ist-Druck im Hauptbremszylinder pHZist größer als die Sollvorgabe pHZsoll ist. Im Gegensatz dazu, ist der obere Grenzwert eHZo mit positivem Vorzeichen behaftet, wenn der Solldruck pHZsoll oberhalb des Ist-Druckes im Hauptbremszylinder pHZist ermittelt wird.

Dem Abschnitt unterhalb des unteren Grenzwertes eHZu wird dabei ein Minimalwert eHZvmin der aus eHZ veränderten Druckdifferenz eHZv zugeordnet. Ab einem oberen Grenzwert eHZo wird der Druckdifferenz eHZ ein Maximalwert eHZvmax der veränderten Druckdifferenz eHZv zugeordnet. So kann die aus der Regel- bzw. Druckdifferenz eHZ zu bildende Größe eHZv mit negativem wie positivem Vorzeichen ausgestattet sein. In einem bevorzugtem Ausführungsbeispiel allerdings entspricht eHZvmin einem Wert von Null und der Maximalwert eHZvmax einen Wert von Eins.

Dieser so gebildete Wert eHZv kann nun in einer besonderen Ausführungsform über Verbindung 212 in Figur 2 direkt zur Sollwertbildung in Block 200 herangezogen werden.

Ein weiteres Ausführungsbeispiel enthält mit Block 211 in Figur 2 eine Ergänzung zur bisherigen Regelung. Mittels Block 211 erfolgt eine Vorsteuerung der Pumpe durch Einkopplung eines Vorsteuerwertes Vpwm. Als besonders zweckmäßig hat sich erwiesen, den Vorsteuerwert Vpwm aus der Druckdifferenz wenigstens eines Bremskreisdrucks pBKist und dem Hauptbremszylinderdruck pHZist herzuleiten. In dieser Druckdifferenz eBKHZ kann bei Verwendung mehrerer Bremskreise auch ein Mittelwert des Bremskreisdrucks Verwendung finden, welcher durch Addition der einzelnen Bremskreisdrücke und Teilung durch deren Gesamtanzahl gewonnen wird.

Figur 4 zeigt dann wieder als Beispiel für einen funktionellen Zusammenhang zwischen dieser Druckdifferenz eBKHZ und dem Vorsteuerwert Vpwm eine Kennlinie 400. In dieser speziellen Ausführungsform wird die Druckdifferenz eBKHZ und der Vorsteuerwert Vpwm für zwei Bremskreise mit den Bremskreisdrücken pBK1 und pBK2 durch

$$Vpwm = vk + \frac{v1 - vk}{e1 - e0} \cdot eBKHZ \qquad (1)$$

mit

$$eBKHZ = \frac{(pBK1 + pBK2)}{2} - pHZist \qquad (2)$$

gebildet, wobei v0, v1 und vk vorgebbare Vorsteuerwerte und e0, e1 bestimmte Druckdifferenzen eBKHZ sind. Dabei entspricht (pBK1+pBK2)/2 dem Ist-Druckwert pBKist eines Bremskreises im vorhergehenden. Aber auch hier ist jeder andere funktionelle Zusammenhang denkbar. Dieser Vorsteuerwert Vpwm wird dann über Verknüpfungsglied 205 in Figur 2 mit dem Ausgangswert des Blockes 202 verkoppelt und die entstandene Kombination beider Werte wird dem, ein Stellglied enthaltenden Block 203 zugeführt.

Figur 5 schließlich zeigt einen bevorzugten funktionalen Zusammenhang zwischen dem Hauptbremszylinderdruck pHZist und dem Bremskreissolldruck pBKsoll in Form der Kennlinie 500, pBKsoll = f (pHZist). Die verwendete Kennlinie 500 weist bis zu einem Druckwert pHZ1 bzw. pBK1 eine deutlich höhere Verstärkung gegenüber der danebengestellten mit linearer Steigung behafteten Kennlinie 501 auf, die eine lineare Verstärkung zwischen dem Ist-Druckwert pHZist und dem Soll-Druckwert pBKsoll im Bremskreis beinhaltet. Die in diesem Zusammenhang verwendete Kennlinie 500 ist frei wählbar. In einem bevorzugtem Ausführungsbeispiel sind dann ab dem Wert pHZ1 bzw. pBK1 die verstärkte Kennlinie 500 und die unverstärkte Kennlinie 501 parallel. Mit der Kennlinie 500 wird eine deutlich definiertere Pedalbewegung und damit ein deutlich verbessertes Pedalgefühl erzielt, da die Pedalkraft dem Druck angepaßt wird. Darüber hinaus kann durch die Wahl der Kennlinie 500, wie in dem Ausführungsbeispiel nach Figur 5 auch bei einer hydraulischen Bremskraftverstärkung (HBV) der fehlende Vakuumbremskraftverstärker nachgebildet werden, wodurch der Fahrer eine angepaßte Pedalbewegung erhält.

**Patentansprüche**

1. Verfahren zur Ansteuerung eines ein Druckmedium fördernden Mittels, insbesondere einer Pumpe, eines Bremssystems, wobei ein Ansteuersignal abhängig von wenigstens einer Druckdifferenz gebildet wird, **dadurch gekennzeichnet, daß** das Ansteuersignal abhängig von einer ersten Druckdifferenz (eHZ) aus Soll- (pHZsoll) und Ist-Druckwert (pHZist) am Eingang des das Druckmedium fördernden Mittels (125) und abhängig von einer zweiten Druckdifferenz (eBK) aus Soll- (pBKsoll) und Ist-Druckwert (pBKist) in wenigstens einem Bremskreis und/oder abhängig von einer dritten Druckdifferenz (eBKHZ) zwischen dem am Eingang des das Druckmedium fördernden Mittels (125) anliegenden ersten Druckwertes (pHZist) und einem zweiten Druckwert (pBKist) abhängig vom Druck in wenigstens einem Bremskreis (pBK1), gebildet wird.

2. Verfahren nach Anspruch 1, **dadurch gekennzeichnet, daß** der Soll-Druckwert (pBKsoll) und/oder der Ist-Druckwert (pBKist) der zweiten Druckdifferenz (eBK) und/oder der zweite Druckwert (pBKist) der dritten Druckdifferenz (eBKHZ) aus jedem Bremskreis getrennt ermittelt und/oder als Kombination der Druckwerte verschiedener, wenigstens zweier Bremskreise (pBK1,pBK2) gebildet werden.

3. Verfahren nach Anspruch 1 und/oder 2, **dadurch gekennzeichnet, daß** die Kombination der Druckwerte verschiedener, wenigstens zweier Bremskreise (pBK1,pBK2) als Mittelwertbildung durch Summation wenigstens zweier Bremskreisdruckwerte (pBK1,pBK2) und anschließender Division durch die Anzahl der zur Summation der Bremskreisdruckwerte (pBK1,pBK2) verwendeten Bremskreise ausgebildet ist.

4. Verfahren nach wenigstens einem der vorhergehenden Ansprüche, **dadurch gekennzeichnet, daß** abhängig von der dritten Druckdifferenz (eBKHZ) ein Vorsteuerwert (Vpwm) gebildet wird, welcher direkt zur Bildung des Ansteuersignals in einem Stellglied (203) verwendet wird.

5. Verfahren nach Anspruch 4, **dadurch gekennzeichnet, daß** der Vorsteuerwert (Vpwm) mittels einer Kennlinie (400) aus der dritten Druckdifferenz (eBKHZ) mit einer Kombination der Druckwerte zweier Bremskreise (pBK1, PBK2) mit (pBK1+pBK2)/2 gebildet wird und daß die Kennlinie (400) durch folgende Funktion dargestellt werden kann:

$$Vpwm = vk + \frac{v1 - vk}{e1 - e0} \cdot eBKHZ \qquad (1)$$

mit

$$eBKHZ = \frac{(pBK1 + pBK2)}{2} - pHZist \qquad (2)$$

, wobei v0, v1 und vk vorgebbare Vorsteuerwerte und e0, e1 Werte für Druckdifferenzen und pHZist dem Ist-Druckwert am Eingang des das Druckmedium fördernden Mittels nach Anspruch 1 entspricht.

6. Verfahren nach Anspruch 1, **dadurch gekennzeichnet, daß** die erste Druckdifferenz (eHZ) in eine veränderte Druckdifferenz (eHZv) angepaßt wird und eine Anpassung insbesondere in Form einer Kennlinie (300) erfolgt.

7. Verfahren nach Anspruch 6, **dadurch gekennzeichnet, daß** die Anpassung in Form einer Kennlinie (300) erfolgt und daß die Kennlinie (300) mit welcher die erste Druckdifferenz (eHZ) in die veränderte Druckdifferenz (eHZv) angepaßt wird folgende Merkmale aufweist:

- einen unteren Grenzwert (eHZu) bis zu welchem ein erster Kennlinienabschnitt reicht, dem ein vorgebbarer Wert (eHZvmin) zugeordnet ist,
- einen oberen Grenzwert (eHZo) ab welchem ein dritter Kennlinienabschnitt beginnt, dem ein vorgebbarer Wert (eHZvmax) zugeordnet ist,
- einen Mittelwert (eHZm) der, insbesondere symmetrisch, zwischen dem oberen Grenzwert (eHZo) und dem unteren Grenzwert (eHZu) in einem zweiten Kennlinienabschnitt liegt, wobei dieser zweite Kennlinienabschnitt einen stetigen Verlauf aufweist.

8. Verfahren nach Anspruch 7, **dadurch gekennzeichnet, daß** der Mittelwert (eHZm) symmetrisch zwischen dem oberen Grenzwert (eHZo) und dem unteren Grenzwert (eHZu) liegt und daß der zweite Kennlinienabschnitt eine konstante, lineare Steigung vom, dem unteren Grenzwert (eHZu) zugeordneten Wert (eHZvmin) bis zum, dem oberen Grenzwert (eHZo) zugeordneten Wert (eHZvmax) aufweist.

9. Verfahren nach wenigstens Anspruch 6, **dadurch gekennzeichnet, daß** die veränderte Druckdifferenz (eHZv) mit der zweiten Druckdifferenz (eBK), insbesondere durch Multiplikation, verknüpft wird.

10. Verfahren nach wenigstens einem der vorhergehenden Ansprüche 6 bis 9, **dadurch gekennzeichnet, daß** die veränderte Druckdifferenz (eHZv) direkt zur Bildung eines Soll-Druckwertes für wenigstens einen Bremskreis (pBKsoll) verwendet wird.

11. Verfahren nach einem der vorhergehenden Ansprüche, **dadurch gekennzeichnet, daß** zur Bildung wenigstens eines der Soll-Druckwerte (pHZsoll, pBKsoll) der Bremswunsch des Fahrers, insbesondere ausgedrückt durch einen Bremspedalweg (sHZ), und/oder der Ist-Druckwert (pHZist) am Eingang des das Druckmedium fördernden Mittels (125) und/oder der Ist-Druckwert in wenigstens einem Bremskreis (pBKist) verwendet werden.

12. Verfahren nach Anspruch 11, **dadurch gekennzeichnet, daß** eine Bildung wenigstens eines der Soll-Druckwerte (pHZsoll, pBKsoll) aus einem Ist-Druckwert (pHZist, PBKist) durch eine Kennlinie (500) erfolgt, die bis zu einem vorgebbaren Druckwert (pHZ1, pBK1) eine größere Steigung aufweist als eine Kennlinie (501), die eine lineare Verstärkung zwischen einem Ist-Druckwert (pHZist, PBKist) und einem Soll-Druckwert (pHZsoll, pBKsoll) beinhaltet und daß ab dem vorgebbaren Druckwert (pHZ1, pBK1) die Kennlinie (500) parallel zur Kennlinie mit linearer Verstärkung (501) verläuft.

13. Verfahren nach wenigstens einem der vorhergehenden Ansprüche, **dadurch gekennzeichnet, daß** der Soll- (pHZsoll) und der Ist-Druckwert (pHZist) der ersten Druckdifferenz (eHZ) am Eingang des das Druckmedium fördernden Mittels (125) dem Soll- und dem Ist-Druckwert eines Hauptbremszylinders (103) einer Bremsanlage entsprechen.

14. Vorrichtung mit einer Steuerung (110) zur Ansteuerung eines ein Druckmedium fördernden Mittels, insbesondere einer Pumpe, eines Bremssystems, wobei in der Steuerung (110) ein Ansteuersignal abhängig von wenigstens einer Druckdifferenz gebildet wird, **dadurch gekennzeichnet, daß** in der Steuerung (110) das Ansteuersignal abhängig von einer ersten Druckdifferenz (eHZ) aus Soll- (pHZsoll) und Ist-Druckwert (pHZist) am Eingang des das Druckmedium fördernden Mittels (125) und abhängig von einer zweiten Druckdifferenz (eBK) aus Soll-(pBKsoll) und Ist-Druckwert (pBKist) in wenigstens einem Bremskreis und/oder abhängig von einer dritten Druckdifferenz (eBKHZ) zwischen dem am Eingang des das Druckmedium fördernden Mittels (125) anliegenden ersten Druckwertes (pHZist) und einem zweiten Druckwert (pBKist) abhängig vom Druck in wenigstens einem Bremskreis (pBK1), gebildet wird.

15. Vorrichtung nach Anspruch 14, **gekennzeichnet durch** folgende Merkmale:

- daß in einem Block (201) der Steuerung (110) die erste Druckdifferenz (eHZ) in eine veränderte Druckdifferenz (eHZv) angepaßt wird und eine Anpassung insbesondere in Form einer Kennlinie (300) erfolgt,
- daß der Soll-Druckwert (pBKsoll) und/oder der Ist-Druckwert (pBKist) der zweiten Druckdifferenz (eBK) und/oder der zweite Druckwert (pBKist) der dritten Druckdifferenz (eBKHZ) aus jedem Bremskreis getrennt ermittelt und/oder als Kombination der Druckwerte verschiedener, wenigstens zweier Bremskreise (pBK1 ,pBK2) in der Steuerung (110) gebildet werden,
- daß in einem weiteren Block (211) der Steuerung (110) abhängig von der dritten Druckdifferenz (eBKHZ) ein Vorsteuerwert (Vpwm) gebildet wird, welcher direkt zur Bildung des Ansteuersignals in einem Stellglied (203) der Steuerung (110) verwendet wird und

- daß in einer Logik (200) zur Bildung wenigstens eines der Soll-Druckwerte (pHZsoll, pBKsoll) der Bremswunsch des Fahrers, insbesondere ausgedrückt **durch** einen Bremspedalweg (sHZ), und/oder der Ist-Druckwert (pHZist) am Eingang des das Druckmedium fördernden Mittels (125) und/oder der Ist-Druckwert in wenigstens einem Bremskreis (pBKist) verarbeitet werden.

## Claims

1. Method for driving a means, in particular a pump, conveying a pressure medium of a brake system, a drive signal being formed as a function of at least one pressure difference, **characterized in that** the drive signal is formed as a function of a first pressure difference (eHZ) from desired (pHZsoll) and actual (pHZist) pressure values at the input of the means (125) conveying the pressure medium, and as a function of a second pressure difference (eBK) from desired (pBKsoll) and actual (pBKist) pressure values in at least one brake circuit and/or as a function of a third pressure difference (eBKHZ) between the first pressure value (pHZist), present at the input of the means (125) conveying the pressure medium, and a second pressure value (pBKist) as a function of the pressure in at least one brake circuit (pBK1).

2. Method according to Claim 1, **characterized in that** the desired pressure value (pBKsoll) and/or the actual pressure value (pBKist) of the second pressure difference (eBK) and/or the second pressure value (pBKist) of the third pressure difference (eBKHZ) are determined separately from each brake circuit, and/or are formed as a combination of the pressure values of various, at least two brake circuits (pBK1 pBK2).

3. Method according to Claims 1 and/or 2, **characterized in that** the combination of the pressure values of various, at least two brake circuits (pBK1, pBK2) is formed as an average value by summing at least two brake circuit pressure values (pBK1, pBK2) and subsequently dividing by the number of the brake circuits used for summing the brake circuit pressure values (pBK1, pBK2).

4. Method according to at least one of the preceding claims, **characterized in that** there is formed as a function of the third pressure difference (eBKHZ) a pilot control value (Vpwm) which is used directly to form the drive signal in an actuator (203).

5. Method according to Claim 4, **characterized in that** the pilot control value (Vpwm) is formed by means of a characteristic (400) from the third pressure difference (eBKHZ) with the aid of a combination of the pressure values (pBK1, pBK2) of two brake circuits with (pBK1+pBK2)/2, and **in that** the characteristic (400) can be represented by the following function:

$$Vpwm = vk + \frac{v1 - vk}{e1 - e0} \cdot eBKHZ \qquad (1)$$

where

$$BKHZ = \frac{(pBK1 + pBK2)}{2} - pHZist \qquad (2)$$

v0, v1 and vk being prescribable pilot control values, and e0, e1 being values for pressure differences, and pHZist corresponding to the actual pressure value at the input of the means conveying the pressure medium according to Claim 1.

6. Method according to Claim 1, **characterized in that** the first pressure difference (eHZ) is adapted into a changed pressure difference (eHZv), and adaptation is carried out, in particular, in the form of a characteristic (300).

7. Method according to Claim 6, **characterized in that** the adaptation is carried out in the form of a characteristic (300), and **in that** the characteristic (300), with the aid of which the first pressure difference (eHZ) is adapted into the changed pressure difference (eHZv), has the following features:

- a lower limiting value (eHZu) up to which there reaches a first characteristic segment which is assigned a prescribable value (eHZvmin),
- an upper limiting value (eHZo) from which there begins a third characteristic segment which is assigned a prescribable value (eHZvmax), and
- a mean value (eHZm) which is situated, particularly symmetrically, between the upper limiting value (eHZo) and the lower limiting value (eHZu) in a second characteristic segment, this second characteristic segment having a continuous profile.

8. Method according to Claim 7, **characterized in that** the mean value (eHZm) is situated symmetrically between the upper limiting value (eHZo) and the lower limiting value (eHZu), and **in that** the second characteristic segment has a constant, linear gradient from the value (eHZvmin) assigned to the lower limiting value (eHZu) up to the value (eHZvmax) assigned to the upper limiting value (eHZo).

**9.** Method according to at least Claim 6, **characterized in that** the changed pressure difference (eHZv) is combined with the second pressure difference (eBK), in particular by multiplication.

**10.** Method according to at least one of the preceding Claims 6 to 9, **characterized in that** the changed pressure difference (eHZv) is used directly to form a desired pressure value for at least one brake circuit (pBKsoll).

**11.** Method according to one of the preceding claims, **characterized in that** in order to form at least one of the desired pressure values (pHZsoll, pBKsoll) use is made of the braking demand of the driver, particularly expressed by a brake pedal travel (sHZ), and/or the actual pressure value (pHZist) at the input of the means (125) conveying the pressure medium, and/or the actual pressure value (pBKist) in at least one brake circuit.

**12.** Method according to Claim 11, **characterized in that** at least one of the desired pressure values (pHZsoll, pBKsoll) is formed from an actual pressure value (pHZist, PBKist) by means of a characteristic (500) which has a steeper gradient up to a prescribable pressure value (pHZ1, pBK1) than a characteristic (501) which contains a linear amplification between an actual pressure value (pHZist, PBKist) and a desired pressure value (pHZsoll, pBKsoll), and **in that** the characteristic (500) runs parallel to the characteristic with linear amplification (501) starting from the prescribable pressure value (pHZ1, pBK1).

**13.** Method according to at least one of the preceding claims, **characterized in that** the desired (pHZsoll) and the actual (pHZist) pressure values of the first pressure difference (eHZ) at the input of the means (125) conveying the pressure medium correspond to the desired and the actual pressure values of a main brake cylinder (103) of a brake system.

**14.** Device having a controller (110) for driving a means, in particular a pump, conveying a pressure medium, of a brake system, a drive signal being formed in the controller (110) as a function of at least one pressure difference, **characterized in that** in the controller (110) the drive signal is formed as a function of a first pressure difference (eHZ) from desired (pHZsoll) and actual (pHZist) pressure values at the input of the means (125) conveying the pressure medium, and as a function of a second pressure difference (eBK) from desired (pBKsoll) and actual (pBKist) pressure values in at least one brake circuit and/or as a function of a third pressure difference (eBKHZ) between the first pressure value (pHZist), present at the input of the means (125) conveying the pressure medium, and a second pressure value (pBKist) as a function of the pressure in at least one brake circuit (pBK1).

**15.** Device according to Claim 14, **characterized by** the following features:

- that the first pressure difference (eHZ) is adapted into a changed pressure difference (eHZv), and adaptation is carried out in the form of a characteristic (300), in particular, in a block (201) of the controller (110),
- that the desired pressure value (pBKsoll) and/ or the actual pressure value (pBKist) of the second pressure difference (eBK) and/or the second pressure value (pBKist) of the third pressure difference (eBKHZ) is determined separately from each brake circuit, and/or formed as a combination of the pressure values of various, at least two brake circuits (pBK1, pBK2) in the controller (110),
- that a pilot control value (Vpwm) which is used directly to form the drive signal in an actuator (203) of the controller (110) is formed in a further block (211) of the controller (110) as a function of the third pressure difference (eBKHZ), and
- that the braking demand of the driver, particularly expressed by a brake pedal travel (sHZ), and/or the actual pressure value (pHZist) at the input of the means (125) conveying the pressure medium, and/or the actual pressure value (pBKist) in at least one brake circuit are processed in a logic unit (200) for forming at least one of the desired pressure values (pHZsoll, pBKsoll).

**Revendications**

**1.** Procédé de commande d'un moyen de circulation d'un fluide sous pression, notamment une pompe, dans un système de freinage avec un signal de commande formé en fonction d'au moins une différence de pressions,
**caractérisé en ce que**
le signal de commande est formé en fonction d'une première différence de pression (eHZ) entre la pression de consigne (pHZcons) et la pression réelle (pHZréel) à l'entrée du moyen de circulation du fluide sous pression, et en fonction d'une deuxième différence de pression (eBK) entre la pression de consigne (pBKcons) et la pression réelle (pBKréel) dans au moins un circuit de frein et/ou en fonction d'une troisième différence de pression (eBKHZ) entre la première valeur de pression (pHZréel) régnant à l'entrée du moyen (125) de circulation du fluide sous pression et une seconde valeur de pression (pBKréel) dépendant de la pression (pBK1) régnant dans au moins un circuit de frein.

**2.** Procédé selon la revendication 1,
**caractérisé en ce que**
la valeur de consigne (pBKcons) et/ou la valeur réelle (pBKréel) de la deuxième différence de pression (eBK) et/ou la seconde valeur de pression (pBKréel) de la troisième différence de pression (eBKHZ) est établie séparément pour chaque circuit de frein et/ou en combinant les valeurs de pression de circuits de frein différents, au nombre de deux au moins (pBK1 pBK2).

**3.** Procédé selon la revendication 1 et/ou 2,
**caractérisé en ce que**
la combinaison de valeurs de pression de circuits de frein différents, au nombre de deux au moins (pBK1, pBK2) est utilisée pour former la valeur moyenne en faisant la somme d'au moins deux valeurs de pression (pBK1, pBK2) de circuits de frein, puis en la divisant par le nombre de circuits de frein dont les valeurs de pression (pBK1, pBK2) ont été sommées.

**4.** Procédé selon au moins une des revendications précédentes,
**caractérisé en ce que**
en fonction de la troisième différence de pression (eBKHZ) est formée une valeur de précommande (Vpwm) qui est utilisée directement pour former le signal de commande dans un organe de réglage (203).

**5.** Procédé selon la revendication 5,
**caractérisé en ce que**
la valeur de précommande (Vpwm) est formée au moyen d'une courbe caractéristique (400) à partir de la troisième différence de pression (eBKHZ), en combinant les valeurs de pression (pBK1 pBK2) de deux circuits de frein sous la forme (pBK1 + pBK2)/2, la courbe caractéristique (400) pouvant être représentée par la fonction suivante :

$$Vpwm = vk + \frac{v1 - vk}{e1 - e0} \, eBKHZ \qquad (1)$$

avec

$$eBKHZ = \frac{(pBK1 + pBK2)}{2} \, pHZréel \qquad (2)$$

v0, v1 et vk étant des valeurs de précommande pouvant être données à l'avance, e0, e1 étant des valeurs de différence de pression, et pHZréel étant la valeur réelle de la pression à l'entrée du moyen de circulation du fluide de pression selon la revendication 1.

**6.** Procédé selon la revendication 1,
**caractérisé en ce que**
la première différence de pression (eHZ) est ajustée en une différence de pression modifiée (eHZv) et cette adaptation a lieu notamment sous la forme d'une courbe caractéristique (300).

**7.** Procédé selon la revendication 6,
**caractérisé en ce que**
l'adaptation a lieu sous la forme d'une caractéristique (300) et cette caractéristique (300) au moyen de laquelle la première différence de pression (eHZ) est adaptée par passage à une différence de pression modifiée (eHZv), présente les caractéristiques suivantes :

- une valeur limite inférieure (eHZu) jusqu'à laquelle s'étend un première partie de caractéristique à laquelle est associée une valeur (eHZvmin) pouvant être donnée à l'avance,
- une valeur limite supérieure (eHZo) à partir de laquelle commence une troisième partie de caractéristique, à laquelle est associée une valeur (eHZvmax) pouvant être donnée à l'avance,
- une valeur moyenne eHZm), en particulier symétrique se trouve entre la valeur limite supérieure (eHZo) et la valeur limite inférieure (eHZu), sur une deuxième partie de la caractéristique présentant une pente constante.

**8.** Procédé selon la revendication 7,
**caractérisé en ce que**
la valeur moyenne (eHZm) se trouve au milieu, entre la valeur supérieure (eHZo) et la valeur limite inférieure (eHZu) et la deuxième partie de la caractéristique est une droite à pente constante, allant de la valeur (eHZvmin) associée à la valeur limite inférieure (eHZu) à la valeur limite supérieure (eHZvmax) associée à la valeur limite supérieure (eHZo).

**9.** Procédé selon la revendication 6,
**caractérisé en ce que**
la différence de pression modifiée (eHZv) est connectée à la deuxième différence de pression (eBK), en particulier par multiplication.

**10.** Procédé selon au moins l'une des revendications 6 à 9,
**caractérisé en ce que**
la différence de pression modifiée (eHZv) est utilisée directement pour former une valeur de consigne (pBKcons) pour au moins un circuit de frein.

**11.** Procédé selon au moins une des revendications précédentes,
**caractérisé en ce que**

pour former au moins une des valeurs de consigne (pHZcons, pBKcons) on utilise le souhait de freinage du conducteur, exprimé en particulier par une course de pédale (sHZ) et/ou la valeur réelle de pression (pHZréel) à l'entrée du moyen (125) de circulation du fluide de pression et/ou la valeur réelle (pBKréel) de la pression dans au moins un circuit de frein.

12. Procédé selon la revendication 11,
**caractérisé en ce que**
la formation d'au moins une des valeurs de consigne (pHZcons, pBKcons) a lieu à partir des valeurs réelles de pression (pHZréel, pBKréel) au moyen d'une caractéristique (500) qui, jusqu'à une valeur de pression (pHZ1, pBK1) pouvant être donnée à l'avance présente une pente supérieure à celle d'une caractéristique (501) qui croit linéairement entre une valeur réelle de pression (pHZréel, pBKréel) et une valeur de consigne (pHZcons, pBKcons) et, à partir d'une valeur de pression (pHZ1, pBK1) pouvant être donnée à l'avance, la caractéristique (500) est parallèle à la caractéristique (501) à croissance linéaire.

13. Procédé selon au moins une des revendications précédentes,
**caractérisé en ce que**
la valeur de consigne (pHZcons) et la valeur réelle (pHZréel) de la première différence de pression (eHZ) à l'entrée du moyen (125) de circulation du fluide de pression, correspondent à la valeur de consigne et à la valeur réelle d'un maître-cylindre (103) d'une installation de freinage.

14. Dispositif avec une commande (110) pour commander un moyen de circulation d'un fluide de pression, en particulier une pompe dans un système de freinage, avec formation dans la commande (110) d'un signal de commande en fonction d'au moins une différence de pression,
**caractérisé en ce que**
dans la commande 110 le signal de commande est formé en fonction d'une première différence de pression (eHZ) entre la pression de consigne (pHZcons) et la pression réelle (pHZréel) à l'entrée du moyen de circulation du fluide sous pression, et en fonction d'une deuxième différence de pression (eBK) entre la pression de consigne (pBKcons) et la pression réelle (pBKréel) dans au moins un circuit de frein, et/ou est formé en fonction d'une troisième différence de pression (eBKHZ), entre la première valeur de pression (pHZréel) régnant à l'entrée du moyen (125) de circulation du fluide sous pression et une seconde valeur de pression (pBKréel), dépendant de la pression (pBK1) régnant dans au moins un circuit de frein.

15. Dispositif avec une commande (110) selon la revendication 14, présentant les caractéristiques suivantes :

- dans un bloc (201) de la commande (110), la première différence de pression (eHZ) est adaptée par passage à une différence de pression modifiée (eHZv) et cette adaptation a lieu en particulier sous la forme d'une courbe caractéristique (300),

- la valeur de consigne (pBKcons) de la pression et/ou la valeur réelle (pBKréel) de la deuxième différence de pression (eBK) et/ou la deuxième valeur de pression (pBKréel) de la troisième différence de pression (eBKHZ) sont établies séparément pour chaque circuit de frein et/ou sont formées dans la commande (110) en combinant les valeurs de pression de circuits de frein différents au nombre de deux au moins (pBK1 pBK2),

- dans un autre bloc (211) de la commande (110) est formée en fonction de la troisième différence de pression (eBKHZ) une valeur de préréglage (Vpwm) qui est utilisée directement pour former le signal de commande dans un organe de réglage (203) de la commande (110), et

- dans une logique (200) sont traités, afin de former au moins une valeur de consigne (pHZcons, pBKcons), le souhait de freinage du conducteur, exprimé par une course de la pédale de freinage (sHZ), et/ou la valeur réelle de la pression (pHZréel) à l'entrée du moyen (125) de circulation du fluide de pression et/ou la valeur réelle de la pression (pBKréel) dans au moins un circuit de frein.

FIG. 1

FIG. 2

EP 0 982 208 B1

13

FIG. 3

FIG. 4

14

FIG. 5